# FASCICULE DE BREVET EUROPEEN

(11) **EP 4 177 558 B1**
(45) Date de publication et mention de la délivrance du brevet: **01.01.2025**
(21) Numéro de dépôt: 22205241.7
(22) Date de dépôt: 03.11.2022
(51) Int. Cl.: F28F 7/02, G10K 11/16, G10K 11/172

(54) **MODULE ASSURANT UNE ATTÉNUATION D'ONDES ACOUSTIQUES ET UN ÉCHANGE THERMIQUE**
MODUL ZUR DÄMPFUNG VON SCHALLWELLEN UND WÄRMEAUSTAUSCH
MODULE FOR ACOUSTIC WAVE ATTENUATION AND HEAT EXCHANGE

(30) Priorité: 04.11.2021 FR 2111740
(43) Date de publication de la demande: 10.05.2023
(73) Titulaire: AIRBUS OPERATIONS, 31060 Toulouse Cedex 9 (FR)
(72) Inventeur: BOURHIS, Arnaud, 31060 TOULOUSE (FR); RAVISE, Florian, 31060 TOULOUSE (FR); ZEBIAN, Maxime, 31060 TOULOUSE (FR)
(74) Mandataire: Cabinet Le Guen Maillet

(56) Documents cités:
- FR-A1- 2 960 334
- US-A1- 2011 126 544

## Description

### DOMAINE TECHNIQUE

La présente invention concerne un module assurant une atténuation d'ondes acoustiques générées par l'écoulement d'un premier fluide et permettant également un échange thermique entre ce premier fluide et un deuxième fluide, un procédé de réalisation d'un tel module, une nacelle d'aéronef comportant de tels modules, ainsi qu'un aéronef présentant un tel module.

### ÉTAT DE LA TECHNIQUE ANTÉRIEURE

Une turbomachine d'un aéronef, en particulier une turbomachine à double flux, présente une veine d'air qui s'ouvre à l'avant et par laquelle l'air frais pénètre dans la turbomachine. La veine d'air est délimitée par des parois qui canalisent l'air. Une partie de l'air est utilisée pour réaliser un échange thermique avec des fluides de l'aéronef. À cette fin, des échangeurs thermiques sont mis en place au niveau des parois.

L'intérieur de la veine est également tapissé de structures assurant une atténuation des ondes acoustiques générées par l'écoulement de l'air dans la veine et permettant ainsi d'atténuer le bruit de la turbomachine. De telles structures comprennent généralement une paroi ajourée qui est orientée vers l'intérieur de la veine et à l'arrière de laquelle est disposé un ensemble de cavités en particulier en nid d'abeilles. Les cavités forment des résonateurs quart d'onde qui atténuent une fréquence particulière.

Une implémentation d'échangeurs thermiques au niveau des parois de la veine diminue l'espace affecté aux structures acoustiques ce qui peut engendrer une augmentation du bruit de la turbomachine et il est donc nécessaire de mettre en place une structure qui assure à la fois une atténuation des ondes acoustiques et un échange thermique sans limiter la surface d'atténuation.

Les documents US-A-2011/126544 et FR-A-2 960 334 divulguent des systèmes de l'état de la technique.

### EXPOSE DE L'INVENTION

Un objet de la présente invention est de proposer un module assurant une atténuation des ondes acoustiques générées par l'écoulement d'un premier fluide et un échange thermique entre ce premier fluide et un deuxième fluide.

À cet effet, est proposé un module assurant une atténuation acoustique d'un écoulement d'un premier fluide et un échange thermique entre le premier fluide et un deuxième fluide, le module comportant :
- une première paroi qui est ajourée, le long de laquelle ledit premier fluide s'écoule,
- une deuxième paroi,
- une structure alvéolaire délimitant des alvéoles s'étendant de la deuxième paroi vers la première paroi, et présentant une première extrémité solidaire de la deuxième paroi et une deuxième extrémité, et
- un échangeur thermique dans lequel circule le deuxième fluide,
le module étant caractérisé en ce que la première paroi présente une découpe, en ce que le module comporte un évidement réalisé dans la structure alvéolaire et délimité entre un plancher et un plafond qui sont ajourés, où le plafond obture la découpe, où le plancher s'étend à distance du plafond, où en dehors de l'évidement, la deuxième extrémité de la structure alvéolaire est solidaire de la première paroi et où au niveau de l'évidement, la deuxième extrémité de la structure alvéolaire est solidaire du plancher, et en ce que l'échangeur thermique est fixé à l'intérieur de l'évidement entre le plancher et le plafond. Un tel module assure une atténuation des ondes acoustiques et un échange thermique sans limiter la surface d'atténuation.

Avantageusement, l'échangeur thermique comporte des canalisations qui serpentent dans l'évidement, une canalisation d'apport qui canalise le deuxième fluide depuis sa zone d'utilisation jusqu'aux canalisations et une canalisation d'extraction qui canalise le deuxième fluide depuis les canalisations jusqu'à sa zone d'utilisation.

Avantageusement, la canalisation d'apport et la canalisation d'extraction traversent la structure alvéolaire, le plancher et la deuxième paroi à travers un alésage. Avantageusement, le module comporte pour chaque canalisation d'apport et d'extraction, un joint qui se positionne autour de ladite canalisation et obture l'alésage au niveau du plancher et de la deuxième paroi.

Avantageusement, le module comporte un rebord qui est fixé autour du plancher et s'étend du plancher jusqu'au plafond.

Avantageusement, le module comporte de la mousse entre le rebord et la structure alvéolaire. Selon un mode de réalisation particulier, le module présente le long de la périphérie du plafond, un écart entre le rebord et le plafond, et un mastic est déposé pour obturer l'écart. Selon un mode de réalisation particulier, le plafond déborde sur le rebord avec soyage.

L'invention propose également un procédé de réalisation d'un module selon la variante précédente, où ledit procédé comporte :
- une première étape de fourniture au cours de laquelle la structure alvéolaire est fournie,
- une étape de conformation au cours de laquelle la structure alvéolaire ainsi fournie est conformée pour réaliser l'évidement,
- une deuxième étape de fourniture au cours de laquelle une coque comportant le plancher ajouré est fournie,
- une première étape de fixation au cours de laquelle la coque est fixée dans l'évidement,
- une troisième étape de fourniture au cours de laquelle la première paroi ajourée et découpée selon la découpe est fournie,
- une quatrième étape de fourniture au cours de laquelle la deuxième paroi est fournie,
- une deuxième étape de fixation au cours de laquelle la première paroi et la deuxième paroi sont fixées de part et d'autre de la structure alvéolaire,
- une cinquième étape de fourniture au cours de laquelle l'échangeur est fourni,
- une troisième étape de fixation au cours de laquelle l'échangeur est fixé dans l'évidement,
- une sixième étape de fourniture au cours de laquelle le plafond ajouré est fourni, et
- une quatrième étape de fixation au cours de laquelle le plafond est fixé au-dessus de l'échangeur pour obturer l'évidement.

L'invention propose également une nacelle d'un aéronef comportant une paroi externe et une paroi interne délimitant une veine d'air et où la paroi externe et/ou la paroi interne portent au moins un module selon l'une des variantes précédentes et où la première paroi est orientée vers l'intérieur de la veine.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue en perspective d'un module selon l'invention, et
[Fig. 3] est une vue en coupe au niveau d'une canalisation traversant une structure alvéolaire du module selon l'invention,

### EXPOSÉ DÉTAILLÉ DE MODES DE RÉALISATION

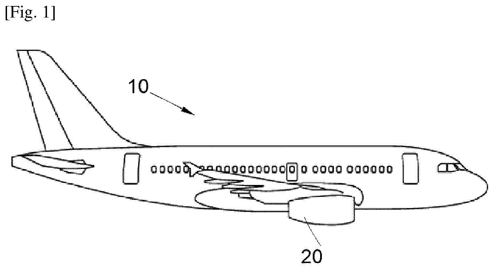

La Fig. 1 montre un aéronef 10 qui présente une nacelle 20 à l'intérieur de laquelle est disposée une turbomachine. À l'intérieur de la nacelle 20 est arrangée une veine d'air qui traverse la nacelle et la turbomachine. La veine d'air est ainsi délimitée par une paroi externe (également appelée OFS « outer fixed structure ») et une paroi interne (également appelée IFS « internal fixed structure ») de la nacelle 20.

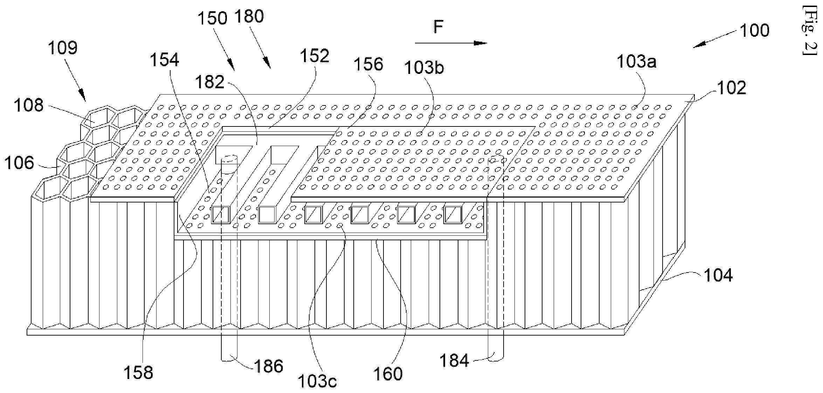

La Fig. 2 montre un module 100 selon l'invention qui assure, d'une part, une atténuation acoustique des bruits générés par un premier fluide s'écoulant le long de ce module 100 et, d'autre part, un échange thermique entre le premier fluide et un deuxième fluide circulant à l'intérieur de ce module 100.

Un tel module 100 peut être mis en place au niveau de la paroi externe ou/et de la paroi interne de la nacelle 20 ou dans un autre environnement tant qu'il est nécessaire d'atténuer le bruit généré par l'écoulement d'un premier fluide et de réaliser un échange thermique entre le premier fluide et un deuxième fluide. Un tel module 100 tapisse la surface de la paroi sur laquelle il est fixé et il peut y avoir plusieurs de ces modules 100 portés par ladite paroi. Dans le mode de réalisation de l'invention présenté à la Fig. 2, le module prend une forme de pavé mais il peut prendre une autre forme de manière à s'adapter à la géométrie de la paroi sur laquelle il est fixé.

Le module 100 comporte une première paroi 102 (coupée à gauche) qui est ajourée et donc traversée de trous 103a et une deuxième paroi 104 à distance et, ici, parallèle à la première paroi 102.

La première paroi 102 est en contact avec le premier fluide, en particulier un gaz, qui s'écoule dans la veine le long de ladite première paroi 102 et qui est représenté ici par la flèche F.

La deuxième paroi 104 est pleine et fixée à la paroi qui délimite la veine.

Le module 100 comporte également une pluralité de parois intermédiaires 106 qui s'étendent à partir de la deuxième paroi 104 vers la première paroi 102. Dans le mode de réalisation de l'invention présenté ici, les parois intermédiaires 106 s'étendent perpendiculairement à la première paroi 102 et à la deuxième paroi 104.

Les parois intermédiaires 106 sont disposées et solidaires les unes des autres de manière à former des alvéoles 108, qui sont ici de section hexagonale et s'étendent de la deuxième paroi 104 vers la première paroi 102. Chaque alvéole 108 présente une première extrémité solidaire de la deuxième paroi 104 et une deuxième extrémité.

Les parois intermédiaires 106 définissent ainsi ensemble une structure alvéolaire 109 qui présente une première extrémité solidaire de la deuxième paroi 104 et une deuxième extrémité.

La première paroi 102 présente une découpe 152, qui est ici de forme rectangulaire.

Le module 100 comporte un évidement 150 réalisé dans la structure alvéolaire 109 et délimité entre un plancher 154 et un plafond 156.

Le plafond 156 (coupé ici à gauche) obture la découpe 152 et est également ajouré et donc traversé de trous 103b. Pour limiter les impacts aérodynamiques, le plafond 156 et la première paroi 102 sont globalement alignés.

Le plancher 154 s'étend à distance du plafond 156, et ici parallèlement à celui-ci, et il est enfoncé à l'intérieur du module 100 vers la deuxième paroi 104. Le plancher 154 couvre ici globalement la même surface que le plafond 156. Le plancher 154 est également ajouré et donc traversé de trous 103c.

En dehors de l'évidement 150, la deuxième extrémité de chaque alvéole 108 et donc la deuxième extrémité de la structure alvéolaire 109 sont solidaires de la première paroi 102 et au niveau de l'évidement 150, la deuxième extrémité de chaque alvéole 108 et donc la deuxième extrémité de la structure alvéolaire 109 sont solidaires du plancher 154. Les parois intermédiaires 106 sont donc plus courtes au niveau de l'évidement 150 qu'en dehors de l'évidement 150.

Dans le cas d'un écoulement du premier fluide, préférentiellement un gaz, dans la veine, la première paroi 102 est orientée vers l'intérieur de la veine. Le premier fluide, qui est ici l'air, s'écoule le long de la première paroi 102 et les trous 103a-c assurent la pénétration d'une partie de l'air dans les alvéoles 108 et donc l'atténuation des ondes acoustiques générées par l'écoulement de l'air. Selon la position, l'air traverse la première paroi 102 ou le plafond 156 et le plancher 154 avant d'atteindre une alvéole 108.

Le fait que les alvéoles 108 sont solidaires les unes des autres même sous l'évidement 150 permet d'assurer que le module 100 constitue un élément structurel.

Le module 100 comporte également un échangeur thermique 180 qui est fixé à l'intérieur de l'évidement 150 entre le plancher 154 et le plafond 156 et dans lequel circule un deuxième fluide qui peut être par exemple de l'huile de la turbomachine et qui se refroidit par échange thermique à travers l'échangeur thermique 180 avec le premier fluide. La fixation de l'échangeur thermique 180 est réalisée par exemple à l'aide d'inserts implantés dans la structure alvéolaire 109 et de vis de serrage coopérant avec ces inserts.

L'échangeur thermique 180 comporte ici des canalisations 182 qui serpentent dans l'évidement 150.

Pour assurer la circulation du deuxième fluide dans les canalisations 182, l'échangeur thermique 180 comporte une canalisation d'apport 184 qui canalise le deuxième fluide depuis sa zone d'utilisation jusqu'aux canalisations 182 et une canalisation d'extraction 186 qui canalise le deuxième fluide depuis les canalisations 182 jusqu'à sa zone d'utilisation.

Dans le mode de réalisation de l'invention présenté sur la Fig. 2, la canalisation d'apport 184 et la canalisation d'extraction 186 traversent la structure alvéolaire 109, la deuxième paroi 104 et le plancher 154 à travers des alésages prévus à cet effet.

L'échangeur thermique 180 est ainsi intégré au module 100 sans réduire la surface associée à l'atténuation acoustique tout en assurant la rigidité du module du fait de la présence des alvéoles 108 sur toute la surface du module 100.

Dans le mode de réalisation de l'invention présenté à la Fig. 2, il y a un seul évidement 150 et un seul échangeur thermique 180, mais il est possible d'avoir plusieurs évidements 150 réalisés à l'intérieur du même module 100 et d'avoir un échangeur thermique 180 par évidement 150.

Un procédé de réalisation d'un tel module 100 comporte par exemple une première étape de fourniture au cours de laquelle la structure alvéolaire 109 est fournie. Le procédé de réalisation se poursuit par une étape de conformation au cours de laquelle la structure alvéolaire 109 ainsi fournie est conformée pour réaliser l'évidement 150 et les éventuels alésages réalisés dans le plancher 154 pour le passage de la canalisation d'apport 184 et de la canalisation d'extraction 186 et des inserts de fixation de l'échangeur thermique 180. La structure alvéolaire 109 est réalisée par exemple en métal (aluminium et ses alliages, titane et ses alliages) ou en fibres synthétiques (Nomex ^{®}, Kevlar ^{®}). Avant la réalisation des alésages, une résine peut être injectée dans les alvéoles où seront réalisés les alésages pour en faciliter l'usinage.

Le procédé comporte une deuxième étape de fourniture au cours de laquelle une coque est fournie. La coque comporte le plancher 154 ajouré et percé des éventuels alésages pour le passage de la canalisation d'apport 184 et de la canalisation d'extraction 186 et des inserts de fixation de l'échangeur thermique 180. La coque peut également comporter des guides pour la mise en place ultérieure de l'échangeur thermique 180.

Dans le mode de réalisation de l'invention présenté à la Fig. 2, la coque comporte également un rebord 158 qui est fixé autour du plancher 154 et s'étend du plancher 154 jusqu'au plafond 156 de manière à délimiter l'évidement 150 latéralement.

La coque est réalisée par exemple en métal (aluminium et ses alliages, titane et ses alliages) ou en matériaux composites.

Le procédé comporte ensuite une première étape de fixation au cours de laquelle la coque est fixée dans l'évidement 150. La fixation de la coque est réalisée par exemple par collage du plancher 154 sur la structure alvéolaire 109 à l'aide d'un adhésif réticulé. La réticulation de l'adhésif peut être effectuée directement sur la coque ou sur la structure alvéolaire 109.

Pour absorber les tolérances dimensionnelles et les dilations entre la coque et la structure alvéolaire 109, de l'adhésif intumescent qui s'expanse pendant la polymérisation est injecté entre le rebord 158 et la structure alvéolaire 109.

De manière optionnelle, une feuille ajourée 160 constituant une protection thermique est fixée entre la structure alvéolaire 109 et le plancher 154. La feuille ajourée 160 est par exemple une feuille de carbone.

Le procédé comporte une troisième étape de fourniture au cours de laquelle la première paroi 102 ajourée et découpée selon la découpe 152 est fournie. La première paroi 102 est réalisée par exemple en métal (aluminium et ses alliages, titane et ses alliages) ou en matériaux composites.

Le procédé comporte une quatrième étape de fourniture au cours de laquelle la deuxième paroi 104 est fournie. La deuxième paroi 104 est réalisée par exemple en métal (aluminium et ses alliages, titane et ses alliages, acier et ses alliages) ou en matériaux composites.

Le procédé comporte ensuite une deuxième étape de fixation au cours de laquelle la première paroi 102 et la deuxième paroi 104 sont fixées, par exemple par collage, de part et d'autre de la structure alvéolaire 109. La première paroi 102 est fixée du côté de l'évidement 150 en alignant la découpe 152 avec l'évidement 150 et la deuxième paroi 104 est fixée du côté opposé à l'évidement 150.

Le procédé comporte une cinquième étape de fourniture au cours de laquelle l'échangeur 180 est fourni et une troisième étape de fixation au cours de laquelle l'échangeur 180 est fixé dans l'évidement 150 éventuellement en faisant traverser la structure alvéolaire 109 par la canalisation d'apport 184 et la canalisation d'extraction 186.

Le procédé comporte une sixième étape de fourniture au cours de laquelle le plafond 156 ajouré est fourni et une quatrième étape de fixation au cours de laquelle le plafond 156 est fixé au-dessus de l'échangeur 180 pour obturer l'évidement 150.

Une protection thermique peut éventuellement être fixée contre la deuxième paroi 104.

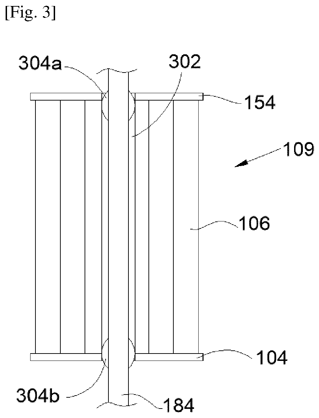

La Fig. 3 montre un exemple d'arrangement au niveau de la canalisation d'apport 184 mais un arrangement similaire peut être réalisé pour la canalisation d'extraction 186.

Un alésage 302 est réalisé à travers la structure alvéolaire 109 ainsi que le plancher 154 et la deuxième paroi 104 et la canalisation d'apport 184 est logée dans l'alésage 302.

Dans le cas où une protection thermique est fixée contre la deuxième paroi 104, l'alésage 302 traverse également la protection thermique.

Pour assurer l'étanchéité au niveau du plancher 154 et de la deuxième paroi 104, le module comporte un joint 304a-b qui se positionne autour de la canalisation d'apport 184 et obture l'alésage 302 au niveau du plancher 154 et respectivement de la deuxième paroi 104. Chaque joint 304a-b est réalisé par exemple en silicone renforcé si besoin avec des céramiques et des fibres de verre.

Selon un mode de réalisation particulier, l'étendue du plafond 156 est plus petite que l'étendue du rebord 158 de la coque. Le module 100 présente alors, le long de la périphérie du plafond 156, un écart entre le rebord 158 et le plafond 156. Pour obturer cet écart, un mastic est déposé pour obturer l'écart et l'étanchéifier. Ce mastic permet également d'absorber les variations géométriques dues aux dilatations thermiques.

Selon un autre mode de réalisation particulier, l'étendue du plafond 156 est plus grande que l'étendue du rebord 158 de la coque et le plafond 156 déborde alors sur le rebord 158 avec soyage pour limiter l'impact aérodynamique. Le soyage consiste à combler l'écart vertical entre le plafond 156 et le rebord 158 par une surface à double pliage qui affleure le plafond 156 et le rebord 158 et qui est réalisée par exemple avec un mastic.

Toutes autres formes permettant de réduire les perturbations aérodynamiques peuvent être utilisées comme par exemple un chanfrein.

La fixation du plafond 156 s'effectue par exemple à l'aide de vis de serrage qui se vissent à travers ledit plafond 156 dans des trous prévus à cet effet. Les trous sont avantageusement des trous oblongs orientés selon différentes orientations pour absorber les variations géométriques du plafond 156 dues aux dilatations thermiques.

## Revendications

1. Module (100) assurant une atténuation acoustique d'un écoulement d'un premier fluide et un échange thermique entre le premier fluide et un deuxième fluide, le module (100) comportant :
- une première paroi (102) qui est ajourée, le long de laquelle ledit premier fluide s'écoule,
- une deuxième paroi (104),
- une structure alvéolaire (109) délimitant des alvéoles (108) s'étendant de la deuxième paroi (104) vers la première paroi (102), et présentant une première extrémité solidaire de la deuxième paroi (104) et une deuxième extrémité, et
- un échangeur thermique (180) dans lequel circule le deuxième fluide,
le module (100) étant **caractérisé en ce que** la première paroi (102) présente une découpe (152), **en ce que** le module (100) comporte un évidement (150) réalisé dans la structure alvéolaire (109) et délimité entre un plancher (154) et un plafond (156) qui sont ajourés, où le plafond (156) obture la découpe (152), où le plancher (154) s'étend à distance du plafond (156), où en dehors de l'évidement (150), la deuxième extrémité de la structure alvéolaire (109) est solidaire de la première paroi (102) et où au niveau de l'évidement (150), la deuxième extrémité de la structure alvéolaire (109) est solidaire du plancher (154), et **en ce que** l'échangeur thermique (180) est fixé à l'intérieur de l'évidement (150) entre le plancher (154) et le plafond (156).

2. Module (100) selon la revendication 1, **caractérisé en ce que** l'échangeur thermique (180) comporte des canalisations (182) qui serpentent dans l'évidement (150), une canalisation d'apport (184) qui canalise le deuxième fluide depuis sa zone d'utilisation jusqu'aux canalisations (182) et une canalisation d'extraction (186) qui canalise le deuxième fluide depuis les canalisations (182) jusqu'à sa zone d'utilisation.

3. Module (100) selon la revendication 2, **caractérisé en ce que** la canalisation d'apport (184) et la canalisation d'extraction (186) traversent la structure alvéolaire (109), le plancher (154) et la deuxième paroi (104) à travers un alésage (302).

4. Module (100) selon la revendication 3, **caractérisé en ce qu'**il comporte pour chaque canalisation d'apport (184) et d'extraction (186), un joint (304a-b) qui se positionne autour de ladite canalisation (184, 186) et obture l'alésage (302) au niveau du plancher (154) et de la deuxième paroi (104).

5. Module (100) selon l'une des revendications 1 à 4, **caractérisé en ce qu'**il comporte un rebord (158) qui est fixé autour du plancher (154) et s'étend du plancher (154) jusqu'au plafond (156).

6. Module (100) selon la revendication 5, **caractérisé en ce qu'**il comporte de la mousse entre le rebord (158) et la structure alvéolaire (109).

7. Module (100) selon l'une des revendications 5 ou 6, **caractérisé en ce qu'**il présente le long de la périphérie du plafond (156), un écart entre le rebord (158) et le plafond (156), et **en ce qu'**un mastic est déposé pour obturer l'écart.

8. Module (100) selon l'une des revendications 5 ou 6, **caractérisé en ce que** le plafond (156) déborde sur le rebord (158) avec soyage.

9. Procédé de réalisation d'un module (100) selon la revendication 1, où ledit procédé comporte :
- une première étape de fourniture au cours de laquelle la structure alvéolaire (109) est fournie,
- une étape de conformation au cours de laquelle la structure alvéolaire (109) ainsi fournie est conformée pour réaliser l'évidement (150),
- une deuxième étape de fourniture au cours de laquelle une coque comportant le plancher (154) ajouré est fournie,
- une première étape de fixation au cours de laquelle la coque est fixée dans l'évidement (150),
- une troisième étape de fourniture au cours de laquelle la première paroi (102) ajourée et découpée selon la découpe (152) est fournie,
- une quatrième étape de fourniture au cours de laquelle la deuxième paroi (104) est fournie,
- une deuxième étape de fixation au cours de laquelle la première paroi (102) et la deuxième paroi (104) sont fixées de part et d'autre de la structure alvéolaire (109),
- une cinquième étape de fourniture au cours de laquelle l'échangeur (180) est fourni,
- une troisième étape de fixation au cours de laquelle l'échangeur (180) est fixé dans l'évidement (150),
- une sixième étape de fourniture au cours de laquelle le plafond (156) ajouré est fourni, et
- une quatrième étape de fixation au cours de laquelle le plafond (156) est fixé au-dessus de l'échangeur (180) pour obturer l'évidement (150).

10. Nacelle (20) d'un aéronef (10) comportant une paroi externe et une paroi interne délimitant une veine d'air et où la paroi externe et/ou la paroi interne portent au moins un module (100) selon l'une des revendications 1 à 8 et où la première paroi (102) est orientée vers l'intérieur de la veine.

## Patentansprüche

1. Modul (100), welches eine akustische Dämpfung einer Strömung eines ersten Fluids und einen Wärmeaustausch zwischen dem ersten Fluid und einem zweiten Fluid sicherstellt, wobei das Modul (100) aufweist:
- eine erste Wand (102), die durchbrochen ist und entlang der das erste Fluid strömt,
- eine zweite Wand (104),
- eine Wabenstruktur (109), welche Wabenzellen (108) begrenzt, die sich von der zweiten Wand (104) zur ersten Wand (102) erstrecken, und ein erstes Ende, das mit der zweiten Wand (104) fest verbunden ist, und ein zweites Ende aufweist, und
- einen Wärmetauscher (180), in dem das zweite Fluid zirkuliert,
wobei das Modul (100) **dadurch gekennzeichnet ist, dass** die erste Wand (102) einen Ausschnitt (152) aufweist, dadurch, dass das Modul (100) eine Aussparung (150) aufweist, die in der Wabenstruktur (109) hergestellt ist und zwischen einem Boden (154) und einer Decke (156) begrenzt wird, die durchbrochen sind, wobei die Decke (156) den Ausschnitt (152) verschließt, wobei sich der Boden (154) in einem Abstand von der Decke (156) erstreckt, wobei außerhalb der Aussparung (150) das zweite Ende der Wabenstruktur (109) mit der ersten Wand (102) fest verbunden ist und wobei an der Aussparung (150) das zweite Ende der Wabenstruktur (109) mit dem Boden (154) fest verbunden ist, und dadurch, dass der Wärmetauscher (180) im Inneren der Aussparung (150) zwischen dem Boden (154) und der Decke (156) befestigt ist.

2. Modul (100) nach Anspruch 1, **dadurch gekennzeichnet, dass** der Wärmetauscher (180) Leitungen (182), die sich in der Aussparung (150) schlängeln, eine Zufuhrleitung (184), die das zweite Fluid von seinem Verwendungsbereich bis zu den Leitungen (182) leitet, und eine Extraktionsleitung (186), die das zweite Fluid von den Leitungen (182) bis zu seinem Verwendungsbereich leitet, aufweist.

3. Modul (100) nach Anspruch 2, **dadurch gekennzeichnet, dass** die Zufuhrleitung (184) und die Extraktionsleitung (186) die Wabenstruktur (109), den Boden (154) und die zweite Wand (104) durch eine Bohrung (302) hindurch durchqueren.

4. Modul (100) nach Anspruch 3, **dadurch gekennzeichnet, dass** es für jede Zufuhrleitung (184) und Extraktionsleitung (186) eine Dichtung (304a-b) aufweist, die um die Leitung (184, 186) herum positioniert ist und die Bohrung (302) am Boden (154) und an der zweiten Wand (104) verschließt.

5. Modul (100) nach einem der Ansprüche 1 bis 4, **dadurch gekennzeichnet, dass** es eine Randleiste (158) aufweist, die um den Boden (154) herum befestigt ist und sich vom Boden (154) bis zur Decke (156) erstreckt.

6. Modul (100) nach Anspruch 5, **dadurch gekennzeichnet, dass** es Schaumstoff zwischen der Randleiste (158) und der Wabenstruktur (109) aufweist.

7. Modul (100) nach einem der Ansprüche 5 oder 6, **dadurch gekennzeichnet, dass** es entlang des Umfangs der Decke (156) einen Zwischenraum zwischen der Randleiste (158) und der Decke (156) aufweist, und dadurch, dass ein Kitt aufgebracht ist, um den Zwischenraum zu verschließen.

8. Modul (100) nach einem der Ansprüche 5 oder 6, **dadurch gekennzeichnet, dass** die Decke (156) über die Randleiste (158) mit Kragenbildung übersteht.

9. Verfahren zur Herstellung eines Moduls (100) nach Anspruch 1, wobei das Verfahren umfasst:
- einen ersten Schritt der Bereitstellung, in dem die Wabenstruktur (109) bereitgestellt wird,
- einen Schritt der Formgebung, in dem die so bereitgestellte Wabenstruktur (109) geformt wird, um die Aussparung (150) herzustellen,
- einen zweiten Schritt der Bereitstellung, in dem ein Rumpf bereitgestellt wird, der den durchbrochenen Boden (154) aufweist,
- einen ersten Schritt der Befestigung, in dem der Rumpf in der Aussparung (150) befestigt wird,
- einen dritten Schritt der Bereitstellung, in dem die durchbrochene und mit dem Ausschnitt (152) versehene erste Wand (102) bereitgestellt wird,
- einen vierten Schritt der Bereitstellung, in dem die zweite Wand (104) bereitgestellt wird,
- einen zweiten Schritt der Befestigung, in dem die erste Wand (102) und die zweite Wand (104) beiderseits der Wabenstruktur (109) befestigt werden,
- einen fünften Schritt der Bereitstellung, in dem der Wärmetauscher (180) bereitgestellt wird,
- einen dritten Schritt der Befestigung, in dem der Wärmetauscher (180) in der Aussparung (150) befestigt wird,
- einen sechsten Schritt der Bereitstellung, in dem die durchbrochene Decke (156) bereitgestellt wird, und
- einen vierten Schritt der Befestigung, in dem die Decke (156) über dem Wärmetauscher (180) befestigt wird, um die Aussparung (150) zu verschließen.

10. Gondel (20) eines Luftfahrzeugs (10), welche eine Außenwand und eine Innenwand aufweist, die einen Luftkanal begrenzen, und wobei die Außenwand und/oder die Innenwand mindestens ein Modul (100) nach einem der Ansprüche 1 bis 8 tragen und wobei die erste Wand (102) dem Inneren des Kanals zugewandt ist.

## Claims

1. Module (100) ensuring an acoustic attenuation of a flow of a first fluid and a heat exchange between the first fluid and a second fluid, the module (100) comprising:
- a first wall (102) which is perforated, along which said first fluid flows,
- a second wall (104),
- a cellular structure (109) delimiting cells (108) which extend from the second wall (104) to the first wall (102), and having a first end secured to the second wall (104) and a second end, and
- a heat exchanger (180) in which the second fluid flows,
the module (100) being **characterized in that** the first wall (102) has a cutout (152), **in that** the module (100) comprises a recess (150) provided in the cellular structure (109) and delimited between a bottom (154) and a top (156) which are perforated, wherein the top (156) closes off the cutout (152), wherein the bottom (154) extends at a distance from the top (156), wherein, outside the recess (150), the second end of the cellular structure (109) is secured to the first wall (102) and wherein, at the recess (150), the second end of the cellular structure (109) is secured to the bottom (154), and **in that** the heat exchanger (180) is fixed inside the recess (150) between the bottom (154) and the top (156).

2. Module (100) according to Claim 1, **characterized in that** the heat exchanger (180) comprises pipes (182) which meander through the recess (150), a supply pipe (184) which channels the second fluid from its zone of use as far as the pipes (182), and an extraction pipe (186) which channels the second fluid from the pipes (182) as far as its zone of use.

3. Module (100) according to Claim 2, **characterized in that** the supply pipe (184) and the extraction pipe (186) pass through the cellular structure (109), the bottom (154) and the second wall (104) through a bore (302).

4. Module (100) according to Claim 3, **characterized in that** it comprises, for each supply pipe (184) and extraction pipe (186), a seal (304a-b) which is positioned around said pipe (184, 186) and which closes off the bore (302) at the bottom (154) and at the second wall (104).

5. Module (100) according to one of Claims 1 to 4, **characterized in that** it comprises an edge (158) which is fixed around the bottom (154) and which extends from the bottom (154) as far as the top (156).

6. Module (100) according to Claim 5, **characterized in that** it comprises foam between the edge (158) and the cellular structure (109).

7. Module (100) according to either of Claims 5 and 6, **characterized in that** it has, along the periphery of the top (156), a gap between the edge (158) and the top (156), and **in that** a mastic is deposited so as to close off the gap.

8. Module (100) according to either of Claims 5 and 6, **characterized in that** the top (156) overlaps the edge (158) with formation of a joggle.

9. Method for producing a module (100) according to Claim 1, wherein said method comprises:
- a first provision step during which the cellular structure (109) is provided,
- a shaping step during which the cellular structure (109) thus provided is shaped so as to produce the recess (150),
- a second provision step during which a shell comprising the perforated bottom (154) is provided,
- a first fixing step during which the shell is fixed in the recess (150),
- a third provision step during which the first wall (102) which is perforated and cut according to the cutout (152) is provided,
- a fourth provision step during which the second wall (104) is provided,
- a second fixing step during which the first wall (102) and the second wall (104) are fixed on either side of the cellular structure (109),
- a fifth provision step during which the exchanger (180) is provided,
- a third fixing step during which the exchanger (180) is fixed in the recess (150),
- a sixth provision step during which the perforated top (156) is provided, and
- a fourth fixing step during which the top (156) is fixed above the exchanger (180) so as to close off the recess (150).

10. Nacelle (20) of an aircraft (10) comprising an external wall and an internal wall delimiting an air duct and wherein the external wall and/or the internal wall bear at least one module (100) according to one of Claims 1 to 8 and wherein the first wall (102) is oriented towards the inside of the duct.
